# EUROPÄISCHE PATENTSCHRIFT

(11) **EP 1 939 480 B1**
(45) Veröffentlichungstag und Bekanntmachung des Hinweises auf die Patenterteilung: **21.03.2012**
(21) Anmeldenummer: 07117403.1
(22) Anmeldetag: 27.09.2007
(51) Int. Cl.: F16D 41/06

(54) **Schaltbarer Freilauf**
Switchable freewheel assembly
Roue libre commutable

(30) Priorität: 29.09.2006 DE 102006046495
(43) Veröffentlichungstag der Anmeldung: 02.07.2008
(73) Patentinhaber: Schaeffler Technologies AG & Co. KG, 91074 Herzogenaurach (DE)
(72) Erfinder: Hochmuth, Harald, 91469 Hagenbüchach (DE); Münck, Horst, 91074 Herzogenaurach (DE); Grau, Ulrich, 91448 Emskirchen (DE)

(56) Entgegenhaltungen:
- EP-A1- 2 029 387
- WO-A1-96/20352
- FR-A1- 2 366 617
- US-B1- 6 212 965

## Beschreibung

### Gebiet der Erfindung

Die Erfindung betrifft einen auch als Klemmgesperre bezeichneten zweirichtungsschaltbaren Freilauf nach dem Oberbegriff des Anspruchs 1.

### Hintergrund der Erfindung

Ein gattungsgemäßer Freilauf ist beispielsweise aus WO 96/20352, US 6212965, FR 2366617 und DE 195 81 436 C1 bekannt. Dieser als Klemmgesperre ausgebildete Freilauf eignet sich beispielsweise für Sitzhöhenverstellungen in Kraftfahrzeugen. Hierbei greift typischerweise eine vorgespannte Feder am Abtriebselement des Freilaufs an. Werden bei Betätigung des Freilaufs Klemmrollen, welche das Abtriebselement ansonsten blockieren, freigeschaltet, so könnte es durch die Vorspannung der Feder kurzzeitig dazu kommen, dass das Abtriebselement voreilt, bis die Klemmrollen dessen Drehbewegung wieder stoppen. Unmittelbar danach werden die Klemmrollen, solange der Betätigungsvorgang fortgeführt wird, wieder aus der Klemmposition gelöst, was wiederum ein kurzzeitiges Vorrauseilen des Abtriebselements zur Folge haben kann. Insgesamt könnte sich eine ruckelnde Bewegung des Abtriebselements ergeben, was als Stick-Slip-Effekt bezeichnet wird. Zur Vermeidung des Stick-Slip-Effekts ist nach der DE 195 81 436 C1 eine in den Freilauf integrierte Reibscheibe vorgesehen.

### Aufgabe der Erfindung

Der Erfindung liegt die Aufgabe zugrunde, eine einen Stick-Slip-Effekt besonders zuverlässig vermeidende zweirichtungsschaltbare Freilaufkupplung anzugeben.

### Zusammenfassung der Erfindung

Diese Aufgabe wird erfindungsgemäß gelöst durch einen schaltbaren Freilauf mit den Merkmalen des Anspruchs 1. Dieser Freilauf ist als zweirichtungsschaltbare Freilaufkupplung ausgebildet und weist einen Außenring mit einer zylindrischen inneren Klemmfläche, ein um die Symmetrieachse des Außenrings rotierbares Abtriebselement, sowie ein zum Betätigen des Abtriebselements vorgesehenes Schaltelement auf. Zwischen einer Oberfläche des Abtriebselements und der zylindrischen Klemmfläche des Außenrings ist ein Spaltraum gebildet, in welchem mehrere Klemmrollen paarweise angeordnet sind. Jeweils ein Paar an Klemmrollen befindet sich dabei auf einer an der Oberfläche des Abtriebselements gebildeten Doppelklemmrampe. Das Schaltelement weist in den Spaltraum eingreifende Klauen auf, die dazu geeignet sind, bei Verdrehung des Schaltelements die in einer Richtung wirkenden Klemmrollen aus deren Klemmposition zu lösen und das Abtriebselement relativ zum Außenring zu verdrehen. Als weitere Komponente weist der Freilauf einen Schaltring auf, der sowohl relativ zum Außenring als auch relativ zum Schaltelement und relativ zum Abtriebselement schwenkbar gelagert ist. Der Schaltring weist direkt mit den Klauen zusammenwirkende Anschlagflächen sowie direkt mit den Klemmrollen zusammenwirkende Anlageflächen auf, wobei eine Einwirkung von den Klauen auf die Klemmrollen bei deren Verdrängung aus der Klemmposition indirekt, nämlich über den Schaltring, erfolgt.

Der Freilauf weist somit insgesamt vier relativ zueinander zumindest in geringem Maße winkelbewegliche Teile mit einer gemeinsamen Achse auf. Von diesen vier Teilen bilden das Abtriebselement, das Schaltelement und der Schaltring eine Gruppe an Teilen mit relativ zueinander begrenzter Winkelbeweglichkeit. Die Winkelbeweglichkeit dieser gesamten Gruppe relativ zum Außenring ist dagegen nicht begrenzt. In kinematischer Umkehr ist auch ein entsprechend arbeitender Freilauf mit einem Außenstern und zylindrischer Innenklemmbahn realisierbar. In jedem Fall ist zumindest zu Beginn des Lösens der Freilaufkupplung aus dessen blockierter Stellung eine direkte Kraftübertragung vom zum Antrieb des Abtriebselements vorgesehenen Schaltelement auf die Klemmrollen ausgeschlossen, wobei das Schaltelement die Klemmrollen vom Schaltring beabstandet hält.

Die mit den Klemmrollen zusammenwirkenden Anlageflächen des Schaltrings beschreiben vorzugsweise eine Oberflächenkontur, die, den Klemmrampen des Schaltelements ähnlich, rampenförmig ist. Im wesentlichen Unterschied zu den Klemmrampen ist jedoch die rampenförmige Oberflächenkontur des Schaltrings derart ausgebildet, das eine Selbsthemmung durch Einklemmen einer Klemmrolle zwischen der Oberfläche des Schaltrings und der zylindrischen Innenoberfläche des Außenrings ausgeschlossen ist. Der Schaltring nimmt somit keinerlei Klemmfunktion war. Wird das Schaltelement aus der Neutralposition heraus, im welcher sämtliche Klemmrollen in Klemmbereitschaft sind, verdreht, so greifen die Klauen des Schaltelements zunächst am Schaltring an, bevor sie das Abtriebselement kontaktieren. Durch das Verdrehen des Schaltrings bei noch feststehenden Abtriebselement werden die in einer bestimmten Richtung wirkenden Klemmrollen aus der Klemmposition verdrängt und gleichzeitig durch die rampenförmig ausgebildeten Anlageflächen des Schaltrings vom Abtriebselement abgehoben. Erst nach dem Abheben der Klemmrollen von den Klemmrampen schlagen die Klauen des Schaltelements an Anschlägen des Abtriebselements an, um dieses mitzudrehen. Dies gilt unabhängig von der Drehrichtung des Schaltelements, wobei der sukzessive Beginn der Rotation der relativ zum Antriebselement schwenkbar gelagerten Teile des Freilaufs dadurch festgelegt ist, das ein Umfangsspiel zwischen den Klauen und den Anschlagflächen des Schaltrings geringer ist als ein Umfangsspiel zwischen den Klauen und den Anschlägen des Abtriebselements.

In einer vorteilhaften Ausführungsform weist das Abtriebselement zwei zueinander parallele, übereinstimmende Klemmrampen aufweisende, drehfest mit einer Welle verbundene Innenringe auf, zwischen welchen der Schaltring drehbar auf der Welle gelagert ist. Jede Klemmrolle erstreckt sich in axialer Richtung des Freilaufs über die drei Ringe, das heißt den mittig angeordneten Schaltring sowie die beiden Innenringe. Die mittige Anordnung des Schaltrings stellt sicher, dass keine Kippbelastungen auf die Klemmrollen ausgeübt werden. Die Drehmomentübertragung vom Schaltelement auf die Welle erfolgt nicht über den Schaltring sondern ausschließlich über die Innenringe. Die Innenringe weisen in der Summe vorzugsweise eine in axialer Richtung des Freilaufs gemessene Stärke auf, welche mindestens so groß, insbesondere mindestens doppelt so groß, wie die Dicke des Schaltrings ist. Die beiden identisch geformten Innenringe sind beispielsweise mittels Formschluss auf der Welle gegen Verdrehung gesichert. Zwischen dem Schaltring und der Welle existiert dagegen keine Verdrehsicherung. Der Schwenkwinkel zwischen dem Schaltring und den Innenringen ist lediglich indirekt, durch die Klauen des Schaltelements begrenzt.

Nachfolgend wird ein Ausführungsbeispiel der Erfindung anhand einer Zeichnung näher erläutert. Hierin zeigen:

### Kurze Beschreibung der Zeichnung

- Figur 1: einen zweirichtungsschaltbaren Freilauf in einer teilweise geschnitten, perspektivischen Ansicht,
- Figuren 2 und 3: den Freilauf nach Figur 1 in verschiedenen perspektivischen Ansichten,
- Figur 4: eine Explosionsdarstellung des Freilaufs nach Figur 1, und
- Figur 5: eine Schnittdarstellung des Freilaufs nach Figur 1.

### Ausführliche Beschreibung der Zeichnung

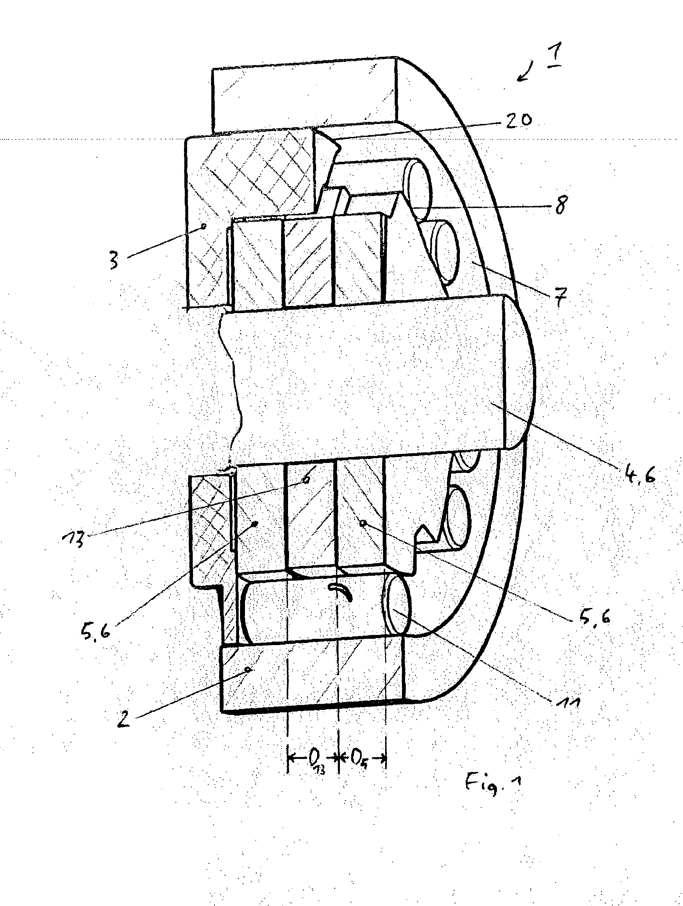

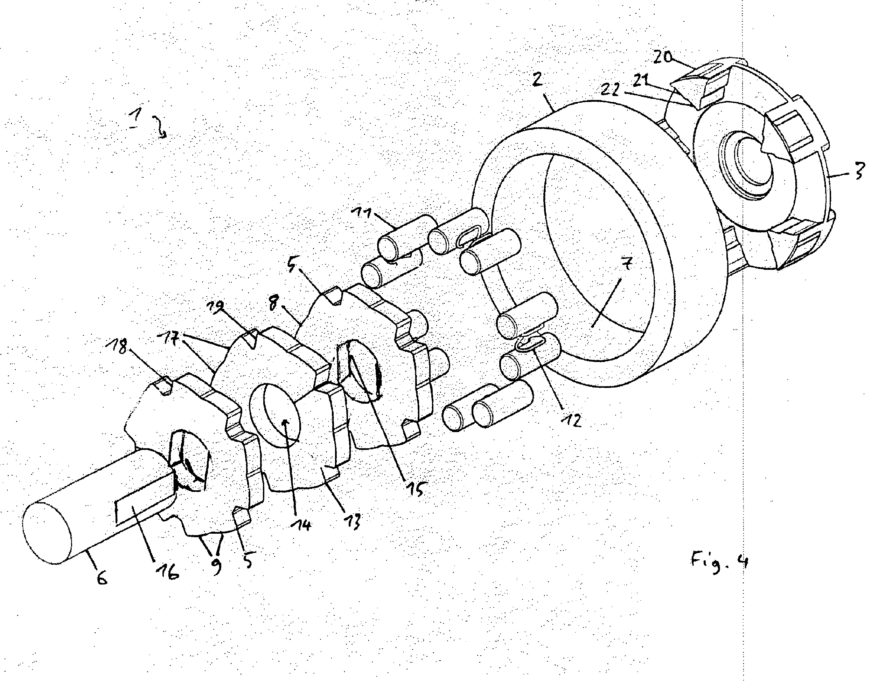

Ein in den Figuren 1 bis 5 dargestellter schaltbarer Freilauf 1 weist einen Außenring 2 auf, der nicht drehbar in eine nicht dargestellte Anschlusskonstruktion eingebaut ist. Als Antriebselement fungiert ein Schaltelement 3, welches konzentrisch zum Außenring 2 angeordnet und beispielsweise mittels eines nicht dargestellten Elektromotors angetrieben ist. Das Abtriebselement des Freilaufs 1 ist insgesamt mit dem Bezugszeichen 4 gekennzeichnet und setzt sich aus zwei zueinander parallelen Innenringen 5 und einer mit diesen drehfest verbunden Welle 6 zusammen. Der als Klemmfläche 7 genutzten zylindrischen Innenoberfläche des Außenrings 2 liegen an der Oberfläche der Innenringe 5 gebildete Klemmrampen 8 gegenüber, wobei jeweils zwei aneinander anschließende, in unterschiedliche Richtungen geneigte Klemmrampen 8 eine Doppelklemmrampe 9 bilden. Der zwischen der die Doppelklemmrampen 9 aufweisenden Oberfläche des Abtriebselements 4 und der Klemmfläche 7 gebildete Zwischenraum ist als Ring- oder Spaltraum 10 bezeichnet. In diesem sind auf jeder Doppelklemmrampe 9 zwei Klemmrollen 11 angeordnet, welche als Klemmelemente in entgegengesetzten Drehrichtungen wirken. Das Abtriebselement 4 ist somit relativ zum Außenring 2 gegen Verdrehung gesichert, wobei die ständige Klemmbereitschaft der Klemmrollen 11 durch zwischen diese gespannte Druckfedern 12 sichergestellt ist.

Sandwichartig zwischen den Innenringen 5 befindet sich ein drehbar auf der Welle 6 gelagerter Schaltring 13. Während der Schaltring 13 mit einer kreisrunden Bohrung 14 versehen ist, weisen die Innenringe 5 Haltekonturen 15 auf, die in Zusammenwirkung mit einer Abflachung 16 der Welle 6 eine verdrehgesicherte Anordnung der Innenringe 5 auf der Welle 6 sicherstellen. Die in axialer Richtung der Welle 6 gemessene Dicke der Innenringe 5 ist jeweils mit D₅, die Dicke des Schaltrings 13 mit D₁₃ bezeichnet. Der Schaltring 13 weist eine Grundform auf, welche der Form der Innenringe 5 ähnelt.

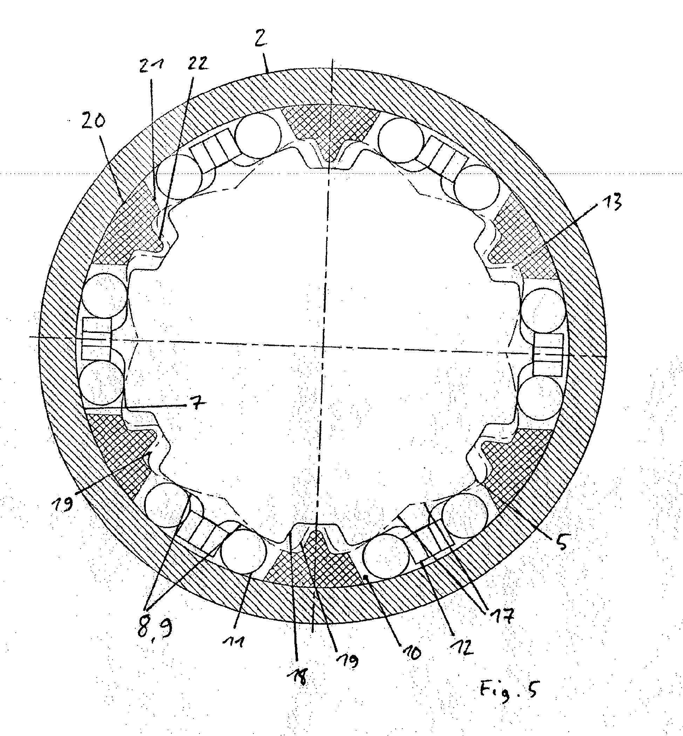

An Stelle von Klemmrampen 8 weist der Schaltring 13 Anlageflächen 17 auf, die zwar rampenförmig ausgebildet, jedoch gerade nicht zur Herstellung einer Klemmwirkung vorgesehen sind. Wie insbesondere aus Figur 5 hervorgeht, schließen die Anlageflächen 17 im Vergleich zu den Klemmrampen 8 mit der gegenüberliegenden Klemmfläche 7 einen wesentlich größeren Winkel ein, wobei dieser so bemessen ist, das es nicht zum Einklemmen einer Klemmrolle 11 zwischen der Klemmfläche 7 und einer Anlagefläche 17 kommen kann. Die Anlageflächen 17 sind nicht nur steiler als die Klemmrampen 8 gestellt, sondern auch in Umfangsrichtung ausgedehnter. Während die Doppelklemmrampe 9 seitlich, das heißt in Umfangsrichtung, durch jeweils einen sich radial nach innen erstreckenden Anschlag 18 begrenzt ist, erstrecken sich die Anlageflächen 17 jeweils bis zu einer ebenfalls radial nach innen verlaufenden Anschlagfläche 19. Somit beschreiben jeweils zwei aneinander grenzende, in entgegengesetzter Richtungen schräg gestellte Anlageflächen 17, ähnlich wie eine Doppelklemmrampe 9, ein Plateau. Aufgrund der insgesamt fünf Paare an Klemmrollen 11 haben damit sowohl die Innenringe 5 als auch der in Fig. 5 gestrichelt dargestellte Schaltring 13 eine etwa sternförmige, fünfarmige Grundform. Zwischen jeweils zwei Doppelklemmrampen 9 greift eine Klaue 20 ein, die integraler Bestandteil des Schaltelements 3 ist. Jede Klaue 20 ist im Querschnitt zur Drehachse des Freilaufs 1 hin spitz zulaufend, wobei an beiden Seiten jeder Klaue 20 ein äußerer Anschlag 21 und ein innerer Anschlag 22 ausgebildet ist. Während der innere Anschlag 22 eine Zusammenwirkung der Klaue 20 sowohl mit dem Schaltring 13 als auch mit den Innenringen 5 ermöglicht, ist der äußere Anschlag 21 zur Zusammenwirkung mit einer Klemmrolle 11 vorgesehen.

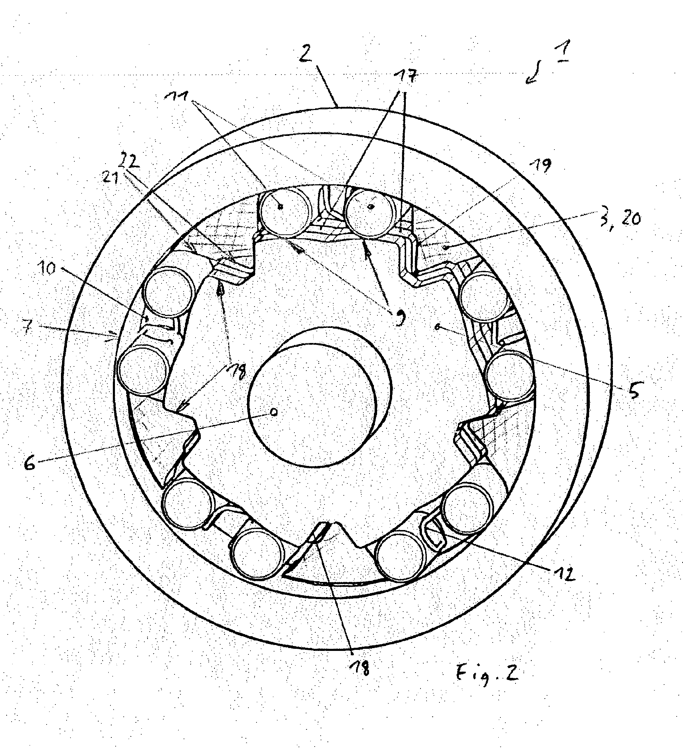

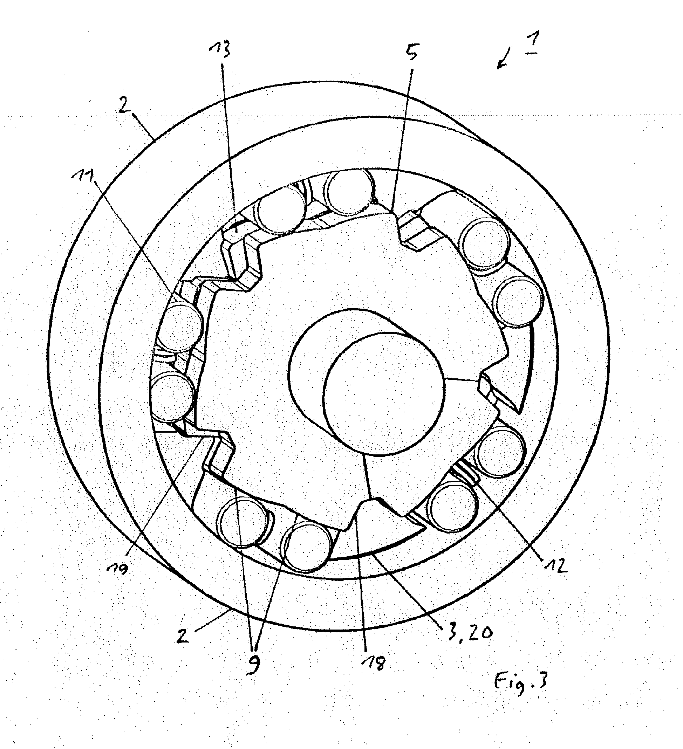

Wird das Schaltelement 3 aus der in Figur 2 dargestellten Neutralposition in die in Figur 3 dargestellte Antriebsposition verdreht, so kontaktiert zunächst der innere Anschlag 22 die Anschlagfläche 19 des Schaltrings 13. Hierdurch beginnt eine Verdrehung des Schaltrings 13 bereits, bevor die Klaue 20 die Klemmrolle 11 kontaktiert. Aufgrund der im Vergleich zur Klemmrampe 8 steiler gestellten Anlagefläche 17 wird die Klemmrolle 11 bei beginnender Verdrehung des Schaltrings 13 sofort von der Klemmrampe 8 abgehoben. Erst bei weiterer Verdrehung des Schaltrings 13 kommt die Klemmrolle 11 zur Anlage am äußeren Anschlag 21 der Klaue 20. Zusätzlich schlägt bei dieser weiteren Verdrehung des Schaltelements 3 der innere Anschlag 22 an den Anschlägen 18 der Innenringe 5 an und überträgt damit die Drehbewegung auf die Welle 6. Wird ihm nunmehr freigeschalteten Freilauf 1 die Winkelgeschwindigkeit des Abtriebselement 4, etwa auf Grund einer von außen aufgebrachten Federvorspannung, kurzzeitig erhöht, so gelangen die Klemmrollen 11, da sie mittels des Schaltrings 13 von den Klemmrampen 8 abgehoben sind, nicht sofort wieder in Kontakt mit den Innenringen 5. Ein schnelles Blockieren des Abtriebselements 4 unmittelbar nach Freischaltung durch das Schaltelement 3, was einen Stick-Slip-Effekt zur Folge haben könnte, wird somit mittels des zwischen das Schaltelement 3 und das Abtriebselement 4 geschalteten Schaltrings 13 unterbunden. Sobald die insbesondere motorisch erzeugte Drehbewegung des Schaltelements 3 gestoppt wird, gelangen die Klemmrollen 11 wieder in ihre Klemmposition, ohne in ihrer Klemmwirkung durch den Schaltring 13 beeinträchtigt zu werden.

### Bezugszeichenliste

- 1: Freilauf
- 2: Außenring
- 3: Schaltelement
- 4: Abtriebselement
- 5: Innenring
- 6: Welle
- 7: Klemmfläche
- 8: Klemmrampe
- 9: Doppelklemmrampe
- 10: Spaltraum
- 11: Klemmrolle
- 12: Druckfeder
- 13: Schaltring
- 14: Bohrung
- 15: Haltekontur
- 16: Abflachung
- 17: Anlagefläche
- 18: Anschlag
- 19: Anschlagfläche
- 20: Klaue
- 21: äußerer Anschlag
- 22: innerer Anschlag

- D₅: Dicke des Innenrings
- D₁₃: Dicke des Schaltrings

## Patentansprüche

1. Schaltbarer Freilauf, mit einem eine innere zylindrische Klemmfläche (7) aufweisenden Außenring (2) und einem konzentrisch zur Klemmfläche (7) angeordneten Abtriebselement (4), welches der Klemmfläche (7) zugewandte Klemmrampen (8) aufweist, wobei im zwischen den Klemmrampen (8) und der Klemmfläche (7) gebildeten Spaltraum (10) Klemmrollen (11) paarweise angeordnet sind, sowie mit einem Schaltelement (3), welches in den Spaltraum (10) eingreifende Klauen (20) aufweist, die dazu ausgebildet sind, Klemmrollen (11) aus deren Klemmposition zu verdrängen und das Abtriebselement (4) relativ zum Außenring (2) zu verdrehen, **gekennzeichnet durch** einen relativ zum Abtriebselement (4) sowie zum Schaltelement (3) schwenkbar gelagerten Schaltring (13), welcher mit den Klauen (20) zusammenwirkende Anschlagflächen (19) sowie mit den Klemmrollen (11) zusammenwirkende Anlageflächen (17) aufweist, wobei eine Kraftübertragung von den Klauen (20) auf die Klemmrollen (11) beim Lösen aus deren Klemmposition mittelbar über den Schaltring (13) vorgesehen ist.

2. Freilauf nach Anspruch 1, **dadurch gekennzeichnet, dass** die Anlageflächen (17) des Schaltrings (13) eine rampenförmige Oberflächenkontur aufweisen.

3. Freilauf nach Anspruch 2, **dadurch gekennzeichnet, dass** die rampenförmige Oberflächenkontur des Schaltrings (13) derart ausgebildet ist, dass keine Selbsthemmung durch Einklemmen der Klemmenrollen (11) zwischen den Anlageflächen (17) und der zylindrischen Klemmfläche (7) auftritt.

4. Freilauf nach einen der Ansprüche 1 bis 3 **dadurch gekennzeichnet, dass** ein Umfangsspiel zwischen den Klauen (20) und den Anschlagflächen (19) des Schaltrings (13) geringer ist als ein Umfangsspiel zwischen den Klauen (20) und Anschlägen (18) des Abtriebselements (4).

5. Freilauf nach einen der Ansprüche 1 bis 4, **dadurch gekennzeichnet, dass** das Abtriebselement (4) zwei zueinander parallele, übereinstimmend konturierte Klemmrampen (8) aufweisende, drehfest mit einer Welle (6) verbundene Innenringe (5) umfasst, zwischen welchen der Schaltring (13) drehbar auf der Welle (6) gelagert ist.

6. Freilauf nach Anspruch 5, **dadurch gekennzeichnet, dass** die in axialer Richtung der Welle (6) gemessene Dicke des Schaltrings (13) geringer als die Summe aus der Dicke beider Innenringe (5) ist.

7. Freilauf nach Anspruch 5 oder 6, **dadurch gekennzeichnet, dass** die beiden Innenringe (5) eine übereinstimmende Form aufweisen.

8. Freilauf nach einem der Ansprüche 5 bis 7, **dadurch gekennzeichnet, dass** der Schaltring (13) sowie die Innenringe (5) derart gestaltet sind, dass der Schaltring (13) die Klemmrolle (11) beim Lösen aus deren Klemmposition von den Innenringen (5) abhebt.

## Claims

1. Switchable freewheel, having an outer ring (2) which has an internal cylindrical clamping surface (7) and having a drive output element (4) which is arranged concentrically with respect to the clamping surface (7) and which has clamping ramps (8) facing towards the clamping surface (7), wherein clamping rollers (11) are arranged in a paired fashion in the gap space (10) formed between the clamping ramps (8) and the clamping surface (7), and having a switching element (3) which has claws (20) which engage into the gap space (10), which claws are designed to displace clamping rollers (11) out of their clamping position and to rotate the drive output element (4) relative to the outer ring (2), **characterized by** a switching ring (13) which is mounted so as to be pivotable relative to the drive output element (4) and relative to the switching element (3), which switching ring has stop surfaces (19) which interact with the claws (20) and has contact surfaces (17) which interact with the clamping rollers (11), wherein a transmission of force from the claws (20) to the clamping rollers (11) during the release of the latter from their clamping position takes place indirectly via the switching ring (13).

2. Freewheel according to Claim 1, **characterized in that** the contact surfaces (17) of the switching ring (13) have a ramp-shaped surface contour.

3. Freewheel according to Claim 2, **characterized in that** the ramp-shaped surface contour of the switching ring (13) is designed such that no self-locking occurs as a result of jamming of the clamping rollers (11) between the contact surfaces (17) and the cylindrical clamping surface (7).

4. Freewheel according to one of Claims 1 to 3, **characterized in that** an amount of circumferential play between the claws (20) and the stop surfaces (19) of the switching ring (13) is smaller than an amount of circumferential play between the claws (20) and stops (18) of the drive output element (4).

5. Freewheel according to one of Claims 1 to 4, **characterized in that** the drive output element (4) comprises two inner rings (5) which have mutually parallel, correspondingly contoured clamping ramps (8) and which are connected in a rotationally conjoint manner to a shaft (6), between which inner rings the switching ring (13) is mounted rotatably on the shaft (6).

6. Freewheel according to Claim 5, **characterized in that** the thickness, measured in the axial direction of the shaft (6), of the switching ring (13) is smaller than the sum of the thicknesses of the two inner rings (5).

7. Freewheel according to Claim 5 or 6, **characterized in that** the two inner rings (5) are of corresponding form.

8. Freewheel according to one of Claims 5 to 7, **characterized in that** the switching ring (13) and the inner rings (5) are designed such that the switching ring (13) lifts the clamping roller (11) from the inner rings (5) during the release of said clamping roller from its clamping position.

## Revendications

1. Roue libre commutable, comprenant une bague extérieure (2) comportant une surface de serrage (7) cylindrique intérieure et un élément de sortie (4) disposé de manière concentrique à la surface de serrage (7), lequel élément de sortie comporte des rampes de serrage (8) situées en regard de la surface de serrage (7), des rouleaux de serrage (11) étant disposés par paires dans l'espace interstitiel (10) formé entre les rampes de serrage (8) et la surface de serrage (7), et comprenant un élément de commutation (3) qui comporte des griffes (20) qui viennent en prise dans l'espace interstitiel (10) et qui sont conçues pour déloger les rouleaux de serrage (11) de leur position de serrage et pour faire tourner l'élément de sortie (4) par rapport à la bague extérieure (2), **caractérisée par** une bague de commutation (13) qui est montée de manière pivotante par rapport à l'élément de sortie (4) ainsi qu'à l'élément de commutation (3), et qui comporte des surfaces de butée (19) coopérant avec les griffes (20) ainsi que des surfaces d'appui (17) coopérant avec les rouleaux de serrage (11), un transfert de forces des griffes (20) aux rouleaux de serrage (11) étant prévu directement par l'intermédiaire de la bague de commutation (13) lors du desserrage de ces derniers hors de leur position de serrage.

2. Roue libre selon la revendication 1, **caractérisée en ce que** les surfaces d'appui (17) de la bague de commutation (13) présentent un contour de surface en forme de rampe.

3. Roue libre selon la revendication 2, **caractérisée en ce que** le contour de surface en forme de rampe de la bague de commutation (13) est réalisé de telle sorte qu'aucun blocage automatique ne survienne de par le serrage des rouleaux de serrage (11) entre les surfaces d'appui (17) et la surface de serrage (7) cylindrique.

4. Roue libre selon l'une quelconque des revendications 1 à 3, **caractérisée en ce qu'**un jeu périphérique entre les griffes (20) et les surfaces de butée (19) de la bague de commutation (13) est inférieur à un jeu périphérique entre les griffes (20) et des butées (18) de l'élément de sortie (4).

5. Roue libre selon l'une quelconque des revendications 1 à 4, **caractérisée en ce que** l'élément de sortie (4) comprend deux bagues intérieures (5) qui sont parallèles l'une à l'autre, qui comportent des rampes de serrage (8) dotées de contours coïncidents, qui sont reliées à un arbre (6) de manière solidaire en rotation, et entre lesquelles la bague de commutation (13) est montée à rotation sur l'arbre (6).

6. Roue libre selon la revendication 5, **caractérisée en ce que** l'épaisseur de la bague de commutation (13) qui est mesurée dans la direction axiale de l'arbre (6) est inférieure à la somme des épaisseurs des deux bagues intérieures (5).

7. Roue libre selon la revendication 5 ou 6, **caractérisée en ce que** les deux bagues intérieures (5) présentent une forme coïncidente.

8. Roue libre selon l'une quelconque des revendications 5 à 7, **caractérisée en ce que** la bague de commutation (13) ainsi que les bagues intérieures (5) sont conçues de telle sorte que la bague de commutation (13) soulève les rouleaux de serrage (11) des bagues intérieures (5) lors du desserrage des rouleaux de serrage hors de leur position de serrage.
